# FASCICULE DE BREVET EUROPEEN

(11) **EP 1 173 065 B1**
(45) Date de publication et mention de la délivrance du brevet: **23.08.2006**
(21) Numéro de dépôt: 00920856.2
(22) Date de dépôt: 20.04.2000
(51) Int. Cl.: A23C 9/137

(54) **UTILISATION DES MICROFIBRILLES DE CELLULOSE DANS DES COMPOSITIONS LACTEES FERMENTEES**
VERWENDUNG VON CELLULOSEMIKROFIBRILLEN IN FERMENTIERTEN MILCHPRODUKTEN
USE OF CELLULOSE MICROFIBRILS IN FERMENTED MILK COMPOSITIONS

(30) Priorité: 29.04.1999 FR 9905588
(43) Date de publication de la demande: 23.01.2002
(73) Titulaire: DANISCO A/S, 1411 Copenhagen K. (DK)
(72) Inventeur: HUPPERT, Sonia, F-86100 Chatellerault (FR); VASLIN, Sophie, F-92210 Saint-Cloud (FR)
(74) Mandataire: Touati, Catherine
(86) Numéro de dépôt international: PCT/FR2000/001040
(87) Numéro de publication internationale: WO 2000/065925

(56) Documents cités:
- EP-A- 0 295 865
- EP-A- 0 537 554
- EP-A- 0 726 356
- WO-A-91/02463
- WO-A-95/02966
- WO-A-98/02487
- FR-A- 2 770 091
- US-A- 4 659 388
- DATABASE WPI Section Ch, Week 199719 Derwent Publications Ltd., London, GB; Class A11, AN 1997-209337 XP002128246 & JP 09 059301 A (BIOPOLYMER RES KK), 4 mars 1997 (1997-03-04)

## Description

La présente invention a pour objet l'utilisation des microfibrilles de cellulose dans des compositions lactées fermentées, notamment en tant qu'agent correcteur.

La fermentation du lait est un moyen de conservation de lait connu depuis des millénaires. Sur le plan nutritionnel, le lait et les compositions lactées fermentées sont tout à fait comparable. Par rapport au lait, les compositions lactées présentent une meilleure digestibilité. De ce fait, aujourd'hui les compositions lactées fermentées ont un rôle nutritif important, et sont à la base des régimes alimentaires courants aussi bien dans les pays industrialisés que dans ceux en voie de développement.

Le choix des bactéries lactiques ou micro-organismes est essentiel car ce sont ces bactéries qui donnent aux compositions lactées fermentées leurs caractéristiques uniques tant sur le plan nutritif et organoleptique.

Dans les compositions lactées fermentées, les bactéries ont essentiellement deux fonctions :
- elles acidifient le lait en faisant passer d'un pH de l'ordre de 6,60 à un pH de d'ordre de 4,75, voire plus bas encore,
- en présence des protéines du lait, elle contribuent à donner une texture bien particulière au lait.

Par ailleurs, il a été constaté que les bactéries peuvent avoir une action protéolytique plus ou moins importante selon leur nature. Elles peuvent aussi modifier la composition du milieu lactique après fermentation en ce qui concerne par exemple certaines vitamines, polysaccharides, lipides et acides gras.

Les bactéries lactiques ou micro-organismes les plus couramment employées dans la fermentation de lait en général, et dans la fermentation de lait en yaourt en particulier, sont *Lactobacillus bulgaricus* et *Streptococcus thermophilus*. Elles peuvent être utilisées seules ou en mélange. Outre ces bactéries, on peut avoir recours à des bactéries auxilliaires telles que par exemple le *L. acidophilus*, le *Bifidobactérium spp.* et/ou le *L. casei*.

Les bactéries lactiques précitées n'ont pas toutes les mêmes propriétés : par exemple certaines sont plus ou moins texturantes, d'autres acidifient plus ou moins rapidement etc.

Habituellement, l'association de différents types de bactéries lactiques ayant chacun leurs propres caractéristiques a pour avantage d'améliorer les propriétés texturantes (comme par exemple l'épaisseur, la viscosité, la fermeté, l'onctuosité, le velouté) de la composition lactée fermentée ainsi que l'acidité de celle-ci.

Cependant, associer des bactéries lactiques n'est pas sans inconvénient. En effet, certaines bactéries peuvent apporter certains " défauts " au milieu lacté fermenté. A ce titre, on peut citer le cas où certaines bactéries donnent à la composition lactée, une texture épaisse mais filante. Dans un tel cas, il est difficile voire impossible d'arriver à obtenir une texture non filante sans perdre les propriétés épaississantes équivalentes. Par le biais des associations, il est possible de " corriger " le caractère filant mais le caractère épaississant de la composition diminuera sensiblement aussi.

Un autre exemple sera le cas d'une bactérie donnant une texture granuleuse au milieu lacté fermenté. Même si par le biais des associations avec d'autres micro-organismes on réussit à atténuer l'aspect granuleux indésirable, on augmentera sensiblement le temps de fermentation, ce qui rend l'opération économiquement peu intéressante.

A l'heure actuelle, pour remédier aux défauts apportés par les bactéries lors de la fermentation lactique, il n'existe pas de moyen de " correction " qui puisse agir ponctuellement et efficacement, et ce sans porter atteinte aux autres propriétés bénéfiques apportées par la bactérie.

C'est dans ce but que la présente invention propose d'utiliser les microfibrilles de cellulose.

Ainsi, la présente invention a pour objet l'utilisation de microfibrilles de cellulose dans des compositions lactées fermentées en tant qu'agent " correcteur ".

Il a été constaté, et ce de manière tout à fait surprenante, que les microfibrilles de l'invention n'empêchaient pas le développement des bactéries de se produire, et résistent aux pH acides du milieu résultant suite à la fermentation.

Par ailleurs, sur le plan économique l'utilisation des microfibrilles s'est avérée particulièrement avantageux car elles peuvent contribuer à diminuer le coût total de la formulation en remplaçant une partie du lait par exemple par une dispersion aqueuse de microfibrilles, lesquels grâce à leurs propriétés intrinsèques (comme le pouvoir rétenteur d'eau) garantissent le maintien de la texture de la formulation.

Un autre avantage des microfibrilles mises en oeuvre dans l'invention est qu'elles améliorent, de manière significative, de la texture des compositions les comprenant.

Les microfibrilles présentent, en outre, une bonne résistance au cisaillement, ce qui est important dans le cas des compositions lactées brassées ou liquides.

D'autres caractéristiques et avantages de la présente invention apparaîtront plus clairement à la lecture de la description et des exemples qui vont suivre.

Dans le cadre de la présente invention les micrcofibrilles de cellulose sont essentiellement amorphes, c'est-à-dire qu'elles possèdent un taux de cristallinité qui est inférieur ou égal à 50 %. de préférence supérieur ou égal à 15 % et inférieur à 50%.

Les microfibrilles de cellulose sont issues de cellules constituées d'au moins 80% de parois primaires. De préférence, la quantité de parois primaires est d'au moins 85%.

On a de telles caractéristiques notamment avec des cellules de parenchyme telles celles des betteraves sucrières, les agrumes comme les citrons, les oranges, les pamplemousse.

Plus particulièrement, on met en oeuvre de la cellulose issue de la pulpe de betterave sucrière.

Les microfibrilles de cellulose de l'invention sont, selon une variante particulièrement avantageuses, chargées en surface en acides carboxyliques et en polysaccharides acides, seuls ou en mélange.

Par acides carboxyliques, on entend les acides simples, leurs polymères, ainsi que leurs sels. Plus particulièrement, lesdits acides uroniques sont l'acide galacturonique, l'acide glucuronique, ou leurs sels.

En tant que polysaccharides acides, on peut citer les pectines qui sont des acides polygalacturoniques. Ces polysaccharides peuvent être présents en mélange avec des hémicelluloses.

Un mode de réalisation de très avantageux de l'invention est constitué par des microfibrilles dont la surface est au moins chargée en acide galacturonique et/ou en acide polygalacturonique.

Il est à souligner qu'il ne s'agit pas d'un simple mélange de microfibrilles et des acides et polysaccharides, mais plutôt d'une combinaison étroite et intime entre les microfibrilles et les acides et polysaccharides précités. En effet, le procédé de préparation des microfibrilles est tel que les acides et les polysaccharides ne sont que partiellement séparés des fibrilles, et qu'une partie reste en surface de ces dernières leur conférant des propriétés bien spécifiques. Ainsi, on a constaté qu'il n'était pas possible d'obtenir les mêmes propriétés si ces acides et/ou polysaccharides étaient totalement séparés des microfibrilles lors de leur préparation pour leur être rajoutés par la suite.

Le pourcentage des acides carboxyliques et des polysaccharides acides, seuls ou en mélange, sera en général inférieur à environ 30 % en poids, de préférence inférieur à 5 % en poids.

Les microfibrilles de cellulose présentent par ailleurs, une section comprise entre environ 2 et environ 10 nm. La section est plus particulièrement comprise entre environ 2 et environ 4 nm.

Les microfibrilles utilisées dans la présente invention et qui présentent les caractéristiques mentionnées ci-dessus, sont avantageusement obtenues selon un procédé de préparation bien particulier qui va maintenant être décrit.

Il est à noter que ce procédé est fait l'objet notamment d'une demande de brevet européen EP 726 356, à laquelle on pourra se référer pour plus de détails. L'exemple 20 de ce texte donne notamment un mode de préparation de suspension de microfibrilles de cellulose essentiellement amorphes.

Plus particulièrement, dans le cadre de la présente invention, le procédé est effectué sur de la pulpe de végétaux à parois primaires, comme par exemple la pulpe de betterave après que celle-ci a subi une étape d'extraction préalable du saccharose, selon les méthodes connues de la technique.

Le procédé de préparation comprend les étapes suivantes :
(a) hydrolyse partielle acide ou basique de la pulpe, à l'issue de laquelle on récupère un premier résidu solide,
(b) éventuellement extraction du premier résidu solide, effectuée dans des conditions alcalines, à l'issue de laquelle on récupère un second résidu,
(c) lavage du premier ou éventuellement du second résidu,
(d) éventuellement blanchiment du résidu lavé,
(e) dilution du résidu solide obtenu à l'issue de l'étape de (d) de manière à obtenir un taux de matières sèches compris entre 2 et 10 % en poids,
(f) homogénéisation de la suspension diluée obtenue en (e).

Dans l'étape (a), on entend par pulpe de la pulpe humide, déshydratée. conservée par ensilage ou partiellement dépectinée.

L'étape d'hydrolyse (a) peut être effectuée en milieu acide ou en milieu basique.

Pour une hydrolyse acide, la pulpe est mise en suspension dans une solution d'eau pendant quelques minutes de façon à homogénéiser la suspension acidifiée à un pH compris entre 1 et 3, de préférence entre 1,5 et 2,5.

Cette opération est mise en oeuvre avec une solution concentrée d'un acide tel que l'acide chlorhydrique ou l'acide sulfurique.

Cette étape peut être avantageuse pour éliminer les cristaux d'oxalate de calcium qui peuvent être présents dans la pulpe, et qui, du fait de leur caractère abrasif important, peuvent causer des difficultés dans l'étape d'homogénéisation.

Pour une hydrolyse basique, la pulpe est ajoutée à une solution alcaline d'une base, par exemple de la soude ou de la potasse, de concentration inférieure à 9 % en poids, plus particulièrement inférieure à 6 % en poids. De préférence, la concentration de la base est comprise être 1 et 2 % en poids.

On pourra ajouter une faible quantité d'un agent antioxydant soluble dans l'eau. tel que le sulfite de sodium (Na₂SO₃), afin de limiter les réactions d'oxydation de la cellulose.

L'étape (a) est effectuée, en général, à une température comprise entre environ 60°C et 100°C. de préférence comprise entre environ 70°C et 95°C.

La durée de l'étape (a) est comprise entre environ 1 heure et environ 4 heures. Elle est, de préférence, d'environ 2 heures.

Lors de l'étape (a), il se produit une hydrolyse partielle avec libération et solubilisation de la majeure partie des pectines et des hémicelluloses, tout en préservant la masse moléculaire de la cellulose.

Le résidu solide est récupéré à partir de la suspension provenant de l'étape (a) en mettant en oeuvre des méthodes connues. Ainsi, il est possible de séparer le résidu solide par centrifugation, par filtration sous vide ou sous pression, avec les toiles filtrantes, les filtres presses, ou par évaporation.

On soumet éventuellement le premier résidu solide obtenu à une seconde étape d'extraction, effectuée dans des conditions alcalines.

On met en oeuvre une étape d'extraction lorsque l'étape d'hydrolyse (a) a été conduite dans des conditions acides.

Si l'étape d'hydrolyse (a) a été effectuée dans des conditions alcalines, l'étape d'extraction n'est que facultative.

Selon le procédé, l'étape (b) est effectuée avec une base, de préférence, choisie parmi la soude ou la potasse dont la concentration est inférieure à environ 9 % en poids , de préférence comprise entre environ 1% et environ 6 % en poids.

La durée de cette étape est comprise entre environ 1 heure et environ 4 heures. Avantageusement, elle est égale à environ 2 heures.

A l'issue de cette étape (b), si elle a lieu, on récupère un second résidu solide.

Dans l'étape (c), le résidu provenant de l'étape (a) ou (b) est lavé abondamment à l'eau afin de récupérer le résidu de matériau cellulosique.

Le matériau cellulosique de l'étape (c) est ensuite facultativement blanchi dans l'étape (d) selon les méthodes classiques. Par exemple, on peut effectuer un traitement au chlorite de sodium, à l'hypochlorite de sodium. au peroxyde d'hydrogène, à raison de 5 à 20 % par rapport à la quantité de matières sèches traitées.

Différente concentrations d'agent de blanchiment peuvent être utilisées, à des températures comprises entre environ 18°C et 80°C, de préférence entre environ 50°C et 70°C.

La durée de cette étape (d) est comprise entre environ 1 heure et environ 4 heures. Elle est avantageusement comprise entre environ 1 heure et environ 2 heures.

On obtient alors un matériau cellulosique contenant entre 85 % et 95 % en poids de cellulose.

A l'issue de cette étape de blanchiment, il peut être préférable de laver abondamment la cellulose avec de l'eau.

La suspension résultante, éventuellement blanchie, est ensuite rediluée dans de l'eau à raison de 2 à 10 % de matières sèches. puis subit une étape d'homogénéisation.

Celle-ci correspond à un mixage, broyage ou toute opération de cisaillement mécanique élevé, suivie d'un ou de plusieurs passage de la suspension de cellulose à travers un orifice de petit diamètre, soumettant la suspension de cellulose à une chute de pression d'au moins 20 MPa et à une action de cisaillement à vitesse élevée suivie d'un impact de décélération à vitesse élevée.

Le mixage ou broyage est, par exemple, effectué par passage(s) au mixeur ou broyeur pendant une durée allant de quelques minutes à environ une heure, dans un appareil de type WARNING BLENDOR équipé d'une hélice à quatre pales ou broyeur à meule ou tout autre type de broyeur, tel un broyeur colloïdal.

L'homogénéisation proprement dite sera avantageusement effectuée dans un homogénéisateur du type MANTON GAULIN dans lequel la suspension est soumise à une action de cisaillement à vitesse et à pression élevées dans un passage étroit et contre un anneau de choc. On peut aussi citer le MICRO FLUIDIZER qui est un homogénéisateur principalement constitué d'un moteur à air comprimé qui crée de très fortes pressions, d'une chambre d'interaction dans laquelle s'effectue l'opération d'homogénéisation (cisaillement élongationnel, choc et cavitations) et d'une chambre basse pression qui permet la dépressurisation de la dispersion.

La suspension est introduite dans l'homogénéisateur de préférence après préchauffage à une température comprise entre 40°C et 120°C, de préférence comprise entre 85°C et 95°C.

La température de l'opération d'homogénéisation est maintenue entre 95°C et 120°C. de préférence supérieure à 100°C.

La suspension est soumise dans l'homogénéisateur à des pressions comprises entre 20 et 100 MPa, et de préférence supérieures à 50 MPa.

L'homogénéisation de la suspension cellulosique est obtenue par un nombre de passage pouvant varier entre 1 et 20, de préférence entre 2 et 5, jusqu'à l'obtention d'une suspension stable.

L'opération d'homogénéisation peut avantageusement être suivie d'une opération de cisaillement mécanique élevé, par exemple dans un appareil tel que l'ULTRA TURRAX de SYLVERSON.

Selon un mode de réalisation préféré de l'invention les microfibrilles sont associées à au moins un composé hydroxylé.

Plus particulièrement, le composé polyhydroxylé est choisi parmi les hydrates de carbone et leurs dérivés, et les polyols.

En ce qui concerne les hydrates de carbone, on peut tout particulièrement citer les monosaccharides linéaires ou cycliques en C-3 à C-6, et de préférence en C-5 ou C-6, les oligosaccharides, les polysaccharides et leurs dérivés gras comme les sucroesters ou sucroesters d'acides gras, les hydrates de carbone d'alcools et leurs mélanges.

A titre d'exemples non limitatifs de monosaccharides, on peut citer le fructose, le mannose, le galactose, le glucose, le talose, le gulose, l'allose, l'altrose, l'idose, l'arabinose, le xylose, le lyxose et le ribose.

A titre d'oligosaccharides, on peut mentionner entre autres, le saccharose, le maltose et le lactose.

Les polysaccharides peuvent être d'origine animale, végétale, ou encore bactérienne.

En outre, ils peuvent être mis en oeuvre sous une forme anionique ou non ionique.

La gomme xanthane, les succinoglycanes, les carraghénanes, les alginates, seuls ou en mélange, sont des éléments représentatifs des polysaccharides anioniques.

Pour ce qui a trait aux polysaccharide non ioniques, on peut citer notamment les galactomannanes, comme la gomme de guar, la gomme de caroube, l'amidon et ses dérivés non ioniques, les dérivés non ioniques de la cellulose.

Quant aux dérivés des hydrates de carbone, on peut mentionner sans intention de s'y limiter, les sucroesters d'acides gras, les esters d'acides gras, les hydrates de carbone d'alcools de type sorbitol, mannitol, les hydrates de carbone d'acides comme l'acide gluconique, les acides uroniques, et les hydrates de carbone d'éthers comme la cellulose carboxyméthylée.

En ce qui concerne les polyols, on peut mettre en oeuvre dans les formulations alimentaires, du glycérol, du pentaérythritol, du propylène glycol et/ou des alcools polyvinyliques.

Il est à noter que les composés précédemment décrite peuvent être utilisés seuls ou en mélange.

Selon une première variante particulièrement avantageuse, le composé polyhydroxylé est de la cellulose carboxyméthylée.

La cellulose est un polymère constitué d'unités monomériques de glucose. Le groupement carboxylé est introduit de manière connue en soi, en faisant réagir l'acide chloroacétique avec la cellulose.

Le degré de substitution correspond au nombre de groupements carboxyméthylés par unité de glucose. Le degré théorique maximal est de 3.

Selon que le degré de substitution est supérieur à 0.95, ou inférieur ou égal à cette valeur, on précise que la cellulose carboxyméthylée est, respectivement, à haut ou à bas degré de substitution.

De préférence, la cellulose carboxyméthylée est de bas degré de substitution.

Selon une seconde variante, le composé polyhydroxylé est une combinaison de cellulose carboxyméthylée avec l'un au moins des composés choisis parmi les monosaccharides, oligosaccharides, les polysaccharides non ioniques et anioniques et leurs dérivés, les dérivés des hydrates de carbone comme les hydrates de carbone d'alcools, d'acides et d'éthers.

En particulier, la cellulose carboxyméthylée est mise en oeuvre en combinaison avec l'un au moins des composés suivants : la gomme xanthane, le sorbitol, le saccharose.

La teneur totale en composé(s) polyhydroxylé(s) est d'au moins 5 % en poids et d'au plus 30 % en poids, par rapport au poids total des microfibrilles et du ou des composé(s) polyhydroxylé(s). Cette teneur est de préférence entre 10 % et 30 % en poids, et plus préférentiellement encore entre 15 % et 30 % en poids, par rapport au poids total des microfibrilles et du ou des composé(s) polyhydroxylé(s).

Eventuellement, outre le(s) composé(s) polyhydroxylé(s) précité(s), les microfibrilles de cellulose peuvent être associées avec au moins avec un co-additif choisi parmi les composés de formules :
■ (R R N)COA, formule dans laquelle :
   - R ou R identiques ou différents, représentent l'hydrogène ou un radical alkyle en C-1 à C-10, de préférence en C-1 à C-5,
   - A représente l'hydrogène, un radical radical alkyle en C-1 à C-10. de préférence en C-1 à C-5,
■ (R R N), formule dans laquelle R ou R , identiques ou différents, représentent l'hydrogène ou un radical alkyle en C-1 à C-10, de préférence en C-1 à C-5.

En ce qui concerne les composés du type (R R N)COA, on préfère utiliser les composés comprenant deux fonctions amides. De préférence, on utilise l'urée comme additif.

Dans cette variante, la teneur totale en composé(s) polyhydroxylé(s) et en co-additif(s) dans les microfibrilles est d'au moins 5 % en poids et d'au plus 30 % en poids, par rapport au poids total des microfibrilles, du ou des composé(s) polyhydroxylé(s), et du ou des co-additif(s). Cette teneur est de préférence entre 10 % et 30 % en poids, et plus préférentiellement encore entre 15 % et 30 % en poids, par rapport au poids total des microfibrilles, du ou des composé(s) polyhydroxylé(s). et du ou des co-additif(s).

Les microfibrilles de cellulose associées, sont issues du séchage d'une dispersion de microfibrilles en présence d'au moins un composé polyhydroxylé et éventuellement d'au moins un co-additif.

De telles associations ont notamment fait l'objet des demandes internationales WO 98/02486 et WO 98/02487, demandes auxquelles on pourra se référer pour ce qui concerne le mode de préparation de ces associations.

Le procédé de préparation de telles associations de microfibrilles consiste, tout d'abord, à préparer les microfibrilles de cellulose à partir de pulpe cellulosique appropriée en effectuant une hydrolyse puis éventuellement au moins une étape de blanchiment de la pulpe ainsi traitée. Ce qui a été indiqué auparavant à ce propos reste valable et ne sera pas repris ici.

Plus particulièrement, dans une première étape, on ajoute à la suspension de microfibrilles , éventuellement ayant subie au moins un cycle d'homogénéisation, au moins une partie du ou des composé(s) polyhydroxylé(s) et éventuellement du ou des co-additif(s). Puis, dans une seconde étape, on met en oeuvre une étape de séchage de la suspension ainsi additivée.

Selon une première variante, l'addition d'au moins une partie du ou des composé(s) polyhydroxylé(s) et et éventuellement du ou des co-additif(s), est effectuée à l'issue de l'étape d'homogénéisation.

Un mode de réalisation particulièrement approprié de cette variante consiste à ajouter au moins une partie du ou des composé(s) polyhydroxylé(s) et éventuellement du ou des co-additif(s), à la suspension à l'issue de l'étape d'homogénéisation, après que cette dernière a subi au moins une étape de concentration.

A titre indicatif, la ou les étapes de concentration peuvent avoir lieu par filtration, centrifugation. ou encore évaporation d'une partie de l'eau de la suspension, par précipitation, par exemple dans un alcool, par congélation-décongélation, par dialyse.

Selon ce mode de réalisation, l'opération de concentration peut être conduite jusqu'à obtenir un extrait sec d'environ 35 % en poids.

L'introduction du ou des composé(s) polyhydroxylé(s) et éventuellement du ou des co-additif(s), est effectuée de manière connue en soi, c'est-à-dire partout moyen permettant d'introduire de manière homogène une solution, une suspension ou une poudre, à une suspension qui a plutôt la consistance d'une pâte. Par exemple, on peut citer les broyeurs, les extrudeuses, les malaxeurs.

Cette opération peut être effectuée dans une large gamme de température comprise plus particulièrement entre 20 et 80°C.

Un autre mode de réalisation de cette première variante consiste à ajouter au moins une partie de du ou des composé(s) polyhydroxylé(s) et éventuellement du ou des co-additif(s), à la suspension à l'issue de l'étape d'homogénéisation, avant que cette dernière n'ait subi au moins une étape de concentration.

Dans ce cas. l'étape ou les étapes de concentration qui ont lieu après l'ajout du ou des composé(s) polyhydroxylé(s) et éventuellement du ou des co-additif(s), sont effectuées de la même manière que précédemment indiqué.

Selon une deuxième variante, l'introduction d'au moins une partie du ou des composé(s) polyhydroxylé(s) et éventuellement du ou des co-additif(s), est effectuée avant ou pendant l'étape d'homogénéisation. Lorsqu'il est indiqué que l'additivation a lieu pendant l'étape d'homogénéisation, on entend que le ou les composé(s) polyhydroxylé(s) et éventuellement le ou les co-additif(s) sont introduits alors que la pulpe a subi au moins un cycle de l'étape d'homogénéisation.

L'additivation a lieu avantageusement selon les modes de réalisation indiqués dans le cadre de la première variante.

Préalablement à l'étape de séchage proprement dite, il peut être avantageux d'effectuer une mise en forme de la suspension qui a été concentrée comme mentionné auparavant. Cette mise en forme est réalisée de manière connue de l'homme du métier. On peut notamment citer, sans intention de s'y limiter toutefois, l'extrusion, la granulation,

Plus particulièrement, on effectue l'étape de séchage de manière à maintenir au minimum 3 % en poids d'eau par rapport au poids du solide obtenu. Plus particulièrement, le poids d'eau maintenu est compris entre 10 et 30 % en poids.

Le séchage a lieu de manière avantageuse sous air, bien qu'il soit envisageable de le mettre en oeuvre sous un gaz inerte comme l'azote.

Il est en outre à noter que l'on préfère mettre en oeuvre le séchage sous une atmosphère dont le degré d'humidité est contrôlé de manière à pouvoir maintenir le taux d'humidité souhaité dans l'association.

La température de séchage doit limiter toute dégradation des acides carboxyliques, des polysaccharides acides, des hémicellulose et/ou du ou des composé(s) polyhydroxylé(s) et éventuellement du ou des co-additif(s). elle est plus particulièrement comprise entre comprise entre 30 et 80°C, de préférence entre 30 et 60°C.

Il est à noter que l'on ne sortirait pas du cadre de la présente invention en mettant en oeuvre les moyens indiqués précédemment pour l'étape de concentration.

A l'issue de l'étape de séchage, on peut effectuer un broyage de l'association des microfibrilles avec le ou les composé(s) polyhydroxylé(s) et éventuellement avec le ou les co-additif(s) obtenue.

Dans les compositions lactées fermentées selon l'invention, la teneur en microfibrilles de cellulose, seule ou en association avec le ou les composé(s) polyhydroxylé(s) et éventuellement avec le ou les co-additif(s), est supérieure à 0 et inférieure à 5 % en poids par rapport au poids total de la composition lactée fermentée. Plus particulièrement, cette teneur est comprise entre 0,001 % et 2 % en poids par rapport au poids total de la composition lactée fermentée. De préférence, elle est comprise entre 0,01 % et 1 % en poids par rapport au poids total de la composition lactée fermentée.

Les microfibrilles de cellulose selon l'invention, qu'elles soient associées ou non, peuvent être utilisées sous une forme sèche ou sous la forme d'une suspension aqueuse (mise en suspension avant de les mettre en contact avec la compositions lactées), ou encore sous la forme d'une suspension directement issue des procédés décrits ci-dessus.

Dans le cas d'utilisation des microfibrilles sous une forme sèche, elles sont de préférence associées à au moins un composé polyhydroxylé tel que mentionné précédemment.

Les compositions lactées fermentées dans lesquelles sont ajoutées les microfibrilles seules ou associées sont classiquement des systèmes mixtes. colloïdaux de type : suspensions de liquides et de solides, émulsions de gaz et de liquides, émulsion de liquide, ou tout autre système combinant ces possibilités.

Par compositions lactées fermentées, on entend un milieu qui est à base de lait, écrémé, entier, demi-écrémé, cru, pasteurisé, en poudre, UHT, ultrafiltré, microfiltré, concentré, évaporé, et leurs mélange, et qui comprend au moins une bactérie lactique.

Outre le lait et les bactéries ou micro-organismes, les compositions lactées peuvent comprendre au moins un additif choisi parmi par exemple des arômes, des pulpes de fruits ;des fruits, des polysaccharides, stabilisants, des gélifiants. des épaississants, tout les composants du lait (lacto remplaceur), poudre de lait, agent foisonnant, protéine laitière, des mono- et di-saccharides, des fibres alimentaires comme l'inuline, des colorants, anti-oxydants, des conservateurs, des exhausteurs de goût. des sels minéraux, des herbes aromatiques, des épices, de l'ail, des échalotes, des céréales, des fruits secs. des sucres liquides comme le sirop d'érable.

Dans certains cas, on peut aussi envisager d'ajouter de l'eau à ces compositions.

Les compositions lactées fermentées sont obtenues très simplement, en mettant en oeuvre les méthodes classiques de préparation de ces compositions selon leur type. On pourra se référer pour ce qui concerne le procédé de préparation de compositions lactées fermentées, à " Bactérie lactiques, tome 2, H. de Roissart et F.M. Luquet : Chapitre IV-4, A. Loones , pages 139 à 141 ".

A ce titre on peut par exemple suivre un procédé dans lequel :
1) on dispose d'un milieu à base de lait, auquel on peut, le cas échéant, ajouter des additifs tels que ceux cités ci-dessus et/ou de l'eau,
2) on traite le mélange ainsi obtenu thermiquement pour éliminer toute flore microbienne contaminante,
3) à l'issue de l'étape (2), on ensemence le mélange avec au moins une bactérie lactique, et on chauffe le mélange ensemencé à une température conduisant à la fermentation de la ou des bactérie(s) ; à ce stade, on peut éventuellement ajouter dés additifs,
4) lorsque le pH souhaité est atteint, la fermentation est interrompue et on refroidit la composition fermentée. Selon la composition finale, on peut envisager d'ajouter des additifs à ce stade.

La température ainsi que la durée des différents traitements thermiques ne présentent pas de problèmes particuliers dans la mesure où l'homme du métier saura adapter ces paramètres pour un résultat optimal en fonction du type de composition finale.

Les microfibrilles de l'invention peuvent être introduites à tout moment, en une seule fois ou par portion en plusieurs fois. Elles peuvent être introduites indépendamment ou simultanément avec d'autres additifs.

Plus particulièrement, elles peuvent être ajoutées au cours de l'étape (1), lors de l'étape d'ensemencement (3) et/ou à l'issue de l'étape de fermentation (4).

Elle seront avantageusement introduites à l'étape (1) et/ou (3).

Il est à noter à ce sujet que, de manière avantageuse, les compositions comprenant les microfibrilles associées ou non, peuvent être stérilisées sans aucun dommage pour leurs propriétés d'usage.

Par ailleurs, les microfibrilles de cellulose sont compatibles avec les autres ingrédients présents dans le milieu et conservent substantiellement leurs propriétés malgré la diversité des compositions lactées fermentées (pH, forces ioniques, composition).

Un avantage supplémentaire d'utiliser les microfibrilles de cellulose consiste à pallier aux fluctuations pouvant intervenir lors de la fabrication de ces compositions fermentées (variabilité dans la qualité du lait, procédés de fabrication différents, installation différentes).

Comme déjà mentionné, les microfibrilles sont également compatibles avec les bactéries et n'empêchent pas leur développement.

Dans les compositions lactées fermentées, les microfibrilles jouent le rôle de " correcteur " de défauts apportés par les bactéries lors de la fermentation lactique.

Par correction, on entend une atténuation d'un caractère de texture considéré comme un défaut, ledit caractère ou défaut étant induit par une ou plusieurs bactérie(s) lactique(s) présente(s) dans le milieu.

A ce titre, on peut citer notamment le caractère filant, le caractère granuleux, la perte d'épaisseur au brassage, la perte de viscosité au cours du temps.

Le caractère correcteur des microfibrilles peut être déteminé de manière indirecte, par la mesure de viscosité de la composition et par analyse organoleptique.

La viscosité peut être mesurée avec un rhéomètre à contrainte imposée ou à déformation imposée, comme par exemple au moyen d'un viscosimètre de type respectivement CARRIMED® ou RHEOMAT® .

La viscosité peut également être simplement évaluée à l'aide d'un viscosimètre BROOKFIELD® .

L'analyse organoleptique peut être déterminée par un jury d'analyse sensorielle.

Les microfibrilles selon l'invention peuvent être utilisées pour leur fonction d'agent correcteur, dans toutes compositions lactées fermentées comme par exemple les yaourts : brassées ou à boire, les laits fermentés : brassés ou à boire, les fromage frais, les crèmes.

Des exemples concrets mais non limitatifs de l'invention vont maintenant être présentés.

Dans les exemples qui vont suivre, les viscosités en écoulement ont été mesurées au moyen d'un viscosimètre Brookfield RVT, vitesse=10, aiguille=C, à une température d'environ 8°C.

Elle est exprimée en mPa.s.

### EXEMPLES

### Exemple 1

Cet exemple a pour objet la préparation, sous forme sèche, de microfibrilles de cellulose (MFC) comprenant de la carboxyméthylcellulose (CMC).

La dispersion-mère de microfibrilles de cellulose est obtenue conformément au procédé décrit dans l'exemple 20 de la demande de brevet EP 726 356 ; elle comprend 2,3 % en microfibrilles de cellulose et est préhomogénéisée à l'Ultra-Turrax à 14000 tr/mn -1 mn pour 100 g de dispersion) ;

La carboxyméthylcellulose mise en oeuvre présente un degré de substitution égal à 1,2 ; de viscosité moyenne (produit 7LF d'AQUALON).

La CMC est mise en solution dans de l'eau distillée puis ensuite ajoutée à la dispersion-mère de (MFC) et l'ensemble est agité à la pale défloculeuse à 1000 tr/mn pendant 30 mn.

Le mélange est ensuite versé dans des coupelles puis séché dans une étuve ventilée à 40°C, jusqu'à un extrait sec de 77 %, contrôlé par dosage de l'eau à l'aide d'une thermobalance à infrarouge.

Le mélange séché est ensuite broyé au moulin à café, puis tamisé sur un tamis de 500 µm.

### Exemple 2

Le but de cet exemple est de fabriquer des compositions lactées fermentées de type yaourt avec et sans microfibrilles de cellulose. Le procédé de préparation suivi est celui qui a été mentionné plus haut.

Les microfibrilles obtenues selon l'exemple 1, sont ici ajoutés au moment de la préparation du lait, c'est à dire au cours de l'étape (1), et donc avant le traitement thermique.

Le lait utilisé est un lait UHT demi écrémé et une poudre de lait. Il est utilisé soit sans ajout de microfibrilles (témoin), soit avec des microfibrilles additionnées à 0,1 %, 0.5%. et 1%. Les différentes préparations sont traitées thermiquement pendant environ 10 minutes à 90°C.

### Ensemencement et fermentation :

Les bactéries sont ensemencées en direct (DVI : direct vat inoculation).
Les yaourts sont fabriqués à 43°C, refroidis à pH 4,75 et stockés à + 6°C jusqu'à la date limite de consomation.
Ces yaourts seront évalués après refroidissement et stockage une nuit à 6°C. par :
- mesure de la viscosité
- analyse sensorielle

### Bactéries lactiques utilisées :

### Une souche texturante de Streptococcus thermophilus.

Les résultats obtenus sont les suivants :

| **Microfibrilles (%)** | **Viscosité en mPa.s (x1000)** | **Analyse sensorielle** |
|---|---|---|
| 0 | 49 | Epais (2)- Filant (4,5) |
| 0,1 | 60 | Epais (3)- Filant (3) |
| 0,5 | 65 | Epais (4)- Filant (2) |
| 1 | 60 | Epais (5)- Filant (1) |

| | | |
|---|---|---|
| Epais = à la cuillère / échelle de 0 à 6 (épais). | | |
| Filant = à la cuillère / échelle de 0 à 6 (filant). | | |

Les microfibrilles font diminuer le filant du à cette souche texturante dès 0,1%. tout en conservant l'épaisseur du produit (voir en l'augmentant).

### Une souche non texturante de Streptococcus thermophilus.

Les résultats obtenus sont les suivants :

| **Microfibrilles %** | **Viscosité en mPa.s (x1000)** | **Analyse sensorielle** |
|---|---|---|
| 0 | 20 | Epais (1)- Lisse (1) |
| 0,1 | 30 | Epais (3)- Lisse (1) |
| 0,5 | 35 | Epais (4)- Lisse (4) |
| 1 | 50 | Epais (5)- Lisse (4) |

| | | |
|---|---|---|
| Epais = à la cuillère / échelle de 0 à 6 (épais). | | |
| Filant = à la cuillère / échelle de 0 (granuleux) à 6 (lisse). | | |

lci les microfibrilles permettent d'augmenter l'épaisseur du produit et réduisent considérablement l'aspect granuleux.

## Revendications

1. Utilisation de microfibrilles de cellulose dans des compositions lactées fermentées en tant qu'agent correcteur de défauts apportés par les bactéries lors de la fermentation lactique tels que le caractère filant, le caractère granuleux, la perte d'épaisseur au brassage.

2. Utilisation selon la revendication 1, **caractérisée en ce que** les microfibrilles de cellulose ont un taux de cristallinité inférieur ou égal 50 %, de préférence supérieur ou égal à 15 % et inférieur à 50 %.

3. Utilisation selon l'une des revendications 1 ou 2, **caractérisé en ce que** les microfibrilles de cellulose sont issues de cellules constituées d'au moins 80 % de parois primaires.

4. Utilisation selon l'une des revendications 1 à 3, **caractérisée en ce que** les microfibrilles de cellulose sont chargées en surface en acides carboxyliques et en polysaccharides acides, seuls ou en mélange.

5. Utilisation selon la revendication 4, **caractérisée en ce que** le pourcentage des acides carboxyliques et des polysaccharides acides en surface est inférieur à 30 % en poids, de préférence inférieur à 5 % en poids.

6. Utilisation selon l'une quelconque des revendications 1 à 5, **caractérisée en ce que** les microfibrilles sont associées à au moins un composé polyhydroxylé.

7. Utilisation selon l'une quelconque des revendications précédentes, **caractérisé en ce que** le composé polyhydroxylé est choisi parmi les hydrates de carbone et leurs dérivés, et les polyols.

8. Utilisation selon la revendication précédente, **caractérisée en ce que** le composé polyhydroxylé est choisi parmi les monosaccharides linéaires ou cycliques en C-3 à C-6, les oligosaccharides, les polysaccharides et leurs dérivés gras comme les sucroesters d'acides gras, les hydrates de carbone d'alcools et leurs mélanges.

9. Utilisation selon l'une quelconque des revendications 6 à 8, **caractérisée en ce que** le composé polyhydroxylé est au moins un polysaccharide anionique, choisi parmi la gomme xanthane, les succinoglycanes, les carraghénanes, les alginates, seuls ou en mélange.

10. Utilisation selon l'une quelconque des revendications 6 à 9, **caractérisée en ce que** le composé polyhydroxylé est au moins un polysaccharide non ionique choisi parmi les galactomannannes, l'amidon et ses dérivés non ioniques, les dérivés non ioniques de la cellulose.

11. Utilisation selon l'une quelconque des revendications 6 à 10, **caractérisée en ce que** le composé polyhydroxylé est de la carboxyméthylcellulose.

12. Utlisation selon la revendication précédente, **caractérisée en ce que** la cellulose carboxyméthylée est de bas degré de substitution.

13. Utilisation selon l'une quelconque des revendications 1 à 12, **caractérisée en ce que** la teneur totale en composé(s) polyhydroxylé(s) est d'au moins 5 % en poids et d'au plus 30 % en poids, par rapport au poids total des microfibrilles et du ou des composé(s) polyhydroxylé(s).

14. Utilisation selon l'une quelconque des revendications 6 à 13, **caractérisée en ce que** les microfibrilles de cellulose sont associées avec au moins avec un co-additif choisi parmi les composés de formules :
■ (R R N)COA, formule dans laquelle :
- R ou R , identiques ou différents, représentent l'hydrogène ou un radical alkyle en C-1 à C-10, de préférence en C-1 à C-5,
- A représente l'hydrogène, un radical radical alkyle en C-1 à C-10, de préférence en C-1 à C-5,
■ (R R N), formule dans laquelle R ou R , identiques ou différents, représentent l'hydrogène ou un radical alkyle en C-1 à C-10, de préférence en C-1 à C-5.

15. Utilisation selon la revendication 14, **caractérisée en ce que** la teneur totale en composé(s) polyhydroxylé(s) et en co-additif(s) dans les microfibrilles est d'au moins 5 % en poids et d'au plus 30 % en poids, par rapport au poids total des microfibrilles, du ou des composé(s) polyhydroxylé(s), et du ou des co-additif(s).

16. Utilisation dans des compositions lactées fermentées des microfibrilles de cellulose, seules ou en association avec le ou les composé(s) polyhydroxylé(s) et éventuellement avec le ou les co-additif(s), selon l'une quelconque des revendications 1 à 15, **caractérisé en ce que** la teneur en microfibrilles de cellulose, est supérieure à 0 et inférieure à 5 % en poids par rapport au poids total de la composition lactée fermentée.

17. Utilisation selon la revendication précédente, **caractérisée en ce** les microfibrilles de cellulose, seules ou en association avec le ou les composé(s) polyhydroxylé(s) et éventuellement avec le ou les co-additif(s), sont présentes en une teneur comprise entre 0,01 et 1 % en poids par rapport au poids total de la composition lactée fermentée.

## Claims

1. Use of cellulose microfibrils in fermented milk compositions as a corrective agent for defects brought about by bacteria during lactic fermentation such as a stringy nature, a grainy nature or a loss of thickness on agitation.

2. Use according to claim 1, **characterized in that** the cellulose microfibrils have a degree of crystallinity of 50% or less, preferably 15% or more and less than 50%.

3. Use according to claim 1 or claim 2, **characterized in that** the cellulose microfibrils derive from cells at least 80% constituted by primary walls.

4. Use according to one of claims 1 to 3, **characterized in that** the surfaces of the cellulose microfibrils are loaded with carboxylic acids and acid polysaccharides, alone or as a mixture.

5. Use according to claim 4, **characterized in that** the percentage of carboxylic acids and acid polysaccharides on the surface is less than 30% by weight, preferably less than 5% by weight.

6. Use according to any one of claims 1 to 5, **characterized in that** the microfibrils are associated with at least one polyhydroxylated compound.

7. Use according to any one of the preceding claims, **characterized in that** the polyhydroxylated compound is selected from carbohydrates and their derivatives and from polyols.

8. Use according to the preceding claim, **characterized in that** the polyhydroxylated compound is selected from linear or cyclic C₃ to C₆ monosaccharides, oligosaccharides, polysaccharides and their fatty derivatives such as fatty acid sucroesters, alcohol carbohydrates and mixtures thereof.

9. Use according to any one of claims 6 to 8, **characterized in that** the polyhydroxylated compound is at least one anionic polysaccharide selected from xanthan gum, succinoglycanes, carrageenans and alginates, alone or as a mixture.

10. Use according to any one of claims 6 to 9, **characterized in that** the polyhydroxylated compound is at least one non-ionic polysaccharide selected from galactomannans, starch and their non-ionic derivatives, and from non-ionic cellulose derivatives.

11. Use according to any one of claims 6 to 10, **characterized in that** the polyhydroxylated compound is carboxymethylcellulose.

12. Use according to the preceding claim, **characterized in that** the carboxymethylated cellulose has a low degree of substitution.

13. Use according to any one of claims 1 to 12, **characterized in that** the total amount of polyhydroxylated compound(s) is at least 5% by weight and at most 30% by weight with respect to the total weight of the microfibrils and the polyhydroxylated compound(s).

14. Use according to any one of claims 6 to 13, **characterized in that** the cellulose microfibrils are associated with at least one co-additive selected from compounds with formulae:
• (R R N)COA, in which formula:
o R or R, which may be identical or different, represents hydrogen or a C₁ to C₁₀ alkyl radical, preferably C₁ to C₅;
o A represents hydrogen or a C₁ to C₁₀ alkyl radical, preferably C₁ to C₅;
o (R R N) is a formula in which R or R, which may be identical or different, represents hydrogen or a C₁ to C₁₀ alkyl radical, preferably C₁ to C₅.

15. Use according to claim 14, **characterized in that** the total amount of polyhydroxylated compound(s) and co-additive(s) in the microfibrils is at least 5% by weight and at most 30% by weight with respect to the total weight of microfibrils, the polyhydroxylated compound(s) and the co-additive(s).

16. Use, in fermented milk compositions, of cellulose microfibrils alone or in association with polyhydroxylated compound(s) and optionally with co-additive(s), in accordance with any one of claims 1 to 15, **characterized in that** the amount of cellulose microfibrils is more than 0 and less than 5% by weight with respect to the total weight of the fermented milk composition.

17. Use according to the preceding claim, **characterized in that** the cellulose microfibrils, used alone or in association with polyhydroxylated compound(s) and optionally with co-additive(s), are present in an amount in the range 0.01% to 1% by weight with respect to the total weight of the fermented milk composition.

## Patentansprüche

1. Verwendung von Zellulose-Mikrofibrillen in fermentierten Milchprodukten als Mittel zur Korrektur von Mängeln, die während der Milchsäuregärung von den Bakterien hervorgerufen werden, wie beispielsweise Zähigkeit, Körnigkeit oder Verlust der Dicke beim Rühren.

2. Verwendung gemäß Anspruch 1, **dadurch gekennzeichnet, dass** die Zellulose-Mikrofibrillen eine Kristallinität von höchstens 50 %, bevorzugt von wenigstens 15 % und unter 50 %, aufweisen.

3. Verwendung gemäß einem der Ansprüche 1 oder 2, **dadurch gekennzeichnet, dass** die Zellulose-Mikrofibrillen von Zellen stammen, die zu wenigstens 80 % aus primären (Zell-) Wänden bestehen.

4. Verwendung gemäß einem der Ansprüche 1 bis 3, **dadurch gekennzeichnet, dass** die Zellulose-Mikrofibrillen auf der Oberfläche mit Carbonsäuren und sauren Polysacchariden, allein oder in Mischung, beladen sind.

5. Verwendung gemäß Anspruch 4, **dadurch gekennzeichnet, dass** der prozentuale Gehalt der Carbonsäuren und der sauren Polysaccharide auf der Oberfläche unter 30 Gew.-%, bevorzugt unter 5 Gew.-%, liegt.

6. Verwendung gemäß wenigstens einem der Ansprüche 1 bis 5, **dadurch gekennzeichnet, dass** die Mikrofibrillen mit wenigstens einer Polyhydroxyl-Verbindung verbunden sind.

7. Verwendung gemäß wenigstens einem der vorhergehenden Ansprüche, **dadurch gekennzeichnet, dass** die Polyhydroxyl-Verbindung ausgewählt ist aus Kohlehydraten und deren Derivaten und Polyolen.

8. Verwendung gemäß dem vorhergehenden Anspruch, **dadurch gekennzeichnet, dass** die Polyhydroxyl-Verbindung ausgewählt ist aus linearen oder zyklischen C-3- bis C-6-Monosacchariden, Oligosacchariden, Polysacchariden und deren Fettderivaten, wie beispielsweise Sucroester von Fettsäuren, Alkohol-Kohlehydraten und deren Mischungen.

9. Verwendung gemäß wenigstens einem der Ansprüche 6 bis 8, **dadurch gekennzeichnet, dass** es sich bei der Polyhydroxyl-Verbindung um wenigstens ein anionisches Polysaccharid, ausgewählt aus Xanthangummi, Succinoglycanen, Karrageenanen und Alginaten, allein oder in Mischung, handelt.

10. Verwendung gemäß wenigstens einem der Ansprüche 6 bis 9, **dadurch gekennzeichnet, dass** es sich bei der Polyhydroxyl-Verbindung um wenigstens ein nicht ionisches Polysaccharid, ausgewählt aus Galaktomannanen, Amidon und dessen nicht ionischen Derivaten und nicht ionischen Zellulose-Derivaten, handelt.

11. Verwendung gemäß wenigstens einem der Ansprüche 6 bis 10, **dadurch gekennzeichnet, dass** die Polyhydroxyl-Verbindung Carboxymethylcellulose ist.

12. Verwendung gemäß dem vorhergehenden Anspruch, **dadurch gekennzeichnet, dass** die Carboxymethylcellulose einen niedrigen Substitutionsgrad aufweist.

13. Verwendung gemäß wenigstens einem der Ansprüche 1 bis 12, **dadurch gekennzeichnet, dass** der Gesamtgehalt der Polyhydroxyl-Verbindung(en) wenigstens 5 Gew.-% und höchstens 30 Gew.-%, bezogen auf das Gesamtgewicht der Mikrofibrillen und der Polyhydroxyl-Verbindung(en), beträgt.

14. Verwendung gemäß wenigstens einem der Ansprüche 6 bis 13, **dadurch gekennzeichnet, dass** die Zellulose-Mikrofibrillen mit wenigstens einem Co-Additiv verbunden sind, das aus den Verbindungen mit den folgenden Formeln ausgewählt ist:
- (R R N) COA, wobei
- R oder R gleich oder verschieden voneinander sein können und einen Wasserstoff oder ein C-1- bis C-10-, bevorzugt C-1- bis C-5-, Alkyl-Radikal darstellen, und
- A einen Wasserstoff oder ein C-1- bis C-10-, bevorzugt C-1- bis C-5-, Alkyl-Radikal darstellt,
- (R R N), wobei R oder R gleich oder verschieden voneinander sein können und einen Wasserstoff oder ein C-1- bis C-10-, bevorzugt C-1- bis C-5-, Alkyl-Radikal darstellen.

15. Verwendung gemäß Anspruch 14, **dadurch gekennzeichnet, dass** der Gesamtgehalt der Polyhydroxyl-Verbindung(en) und des/der Co-Additivs/Additive in den Mikrofibrillen wenigstens 5 Gew.-% und höchstens 30 Gew.-%, bezogen auf das Gesamtgewicht der Mikrofibrillen, der Polyhydroxyl-Verbindung(en) und des/der Co-Additivs/Additive, beträgt.

16. Verwendung von Zellulose-Mikrofibrillen, allein oder in Verbindung mit (einer) Polyhydroxyl-Verbindung(en) und, gegebenenfalls, (einem) Co-Additiv(en), in fermentierten Milchprodukten gemäß wenigstens einem der Ansprüche 1 bis 15, **dadurch gekennzeichnet, dass** der Gehalt an Zellulose-Mikrofibrillen über 0 Gew.-% und unter 5 Gew.-%, bezogen auf das Gesamtgewicht des fermentierten Milchprodukts, beträgt.

17. Verwendung gemäß dem vorhergehenden Anspruch, **dadurch gekennzeichnet, dass** die Zellulose-Mikrofibrillen, allein oder in Verbindung mit (einer) Polyhydroxyl-Verbindung(en) und, gegebenenfalls, (einem) Co-Additiv(en), mit einem Gehalt von 0,01 bis 1 Gew.-%, bezogen auf das Gesamtgewicht des fermentierten Milchprodukts, vorliegen.
